# FASCICULE DE BREVET EUROPEEN

(11) **EP 1 279 141 B1**
(45) Date de publication et mention de la délivrance du brevet: **06.08.2008**
(21) Numéro de dépôt: 01928000.7
(22) Date de dépôt: 18.04.2001
(51) Int. Cl.: G06K 19/073

(54) **PROCEDE DE CONTRE MESURE DANS UN MICROCIRCUIT ET CARTE A PUCE COMPORTANT LEDIT MICROCIRCUIT**
GEGENMASSNAHMEVERFAHREN IN EINER MIKROSCHALTUNG UND IC-KARTE MIT EINER SOLCHEN SCHALTUNG
COUNTERMEASURE METHOD IN A MICROCIRCUIT, MICROCIRCUIT THEREFOR AND SMART CARD COMPRISING SAID MICROCIRCUIT

(30) Priorité: 28.04.2000 FR 0005531
(43) Date de publication de la demande: 29.01.2003
(73) Titulaire: GEMPLUS, 13420 Gémenos (FR)
(72) Inventeur: DABBOUS, Nora, I-40133 Bologne (IT); NACCACHE, David, F-75009 Paris (FR)
(86) Numéro de dépôt international: PCT/FR2001/001196
(87) Numéro de publication internationale: WO 2001/084491

(56) Documents cités:
- US-A- 4 932 053
- COHEN F B: "OPERATING SYSTEM PROTECTION THROUGH PROGRAM EVOLUTION" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, vol. 12, no. 6, 1 octobre 1993 (1993-10-01), pages 565-584, XP000415701 ISSN: 0167-4048

## Description

La présente invention concerne un procédé de contre-mesure dans un microcircuit.

Elle concerne également un microcircuit mettant en oeuvre le procédé et les supports portables de type carte à puce comportant un tel microcircuit.

On rappelle qu'un microcircuit pour dispositifs portables tels que les cartes à puce, a une architecture formée autour d'un processeur (ou microprocesseur) comprenant un contrôleur et une unité arithmétique et logique (ALU) relié par un bus à des mémoires, dont une mémoire programme non volatile qui contient la ou les données sensibles (clés secrètes) d'un algorithme de cryptographie par exemple. Le contrôleur gère les signaux entrées-sorties I/O (instructions, adresses, données) et l'unité arithmétique et logique effectue des opérations arithmétiques sur les données sur commande du contrôleur.

De tels microcircuits sont utilisés dans des cartes à puce pour certaines applications, par exemple des applications d'accès à certaines banques de données, des applications bancaires, des applications de télé-péage, par exemple pour la télévision, la distribution d'essence ou encore le passage de péages d'autoroutes.

L'invention s'applique tout particulièrement à la sécurité des données sensibles dans des supports tels que les cartes à puce. Il s'agit de données secrètes manipulées par le processeur du microcircuit et susceptibles de transiter sur le bus reliant les mémoires à ce processeur.

L'invention s'applique à la sécurité d'informations secrètes telles que le code secret de l'utilisateur d'une carte à puce ou les clés électroniques utilisées dans des opérations de calcul cryptographique pour le chiffrement et ou l'authentification et ou la signature électronique de messages.

Le brevet US-A-4932053 décrit un circuit de protection des données sensibles dans des supports tels que les cartes à puce.

L'invention s'applique notamment dans le cas de la mise en oeuvre d'algorithmes de cryptographie à clé secrète ou d'algorithmes dits à clé publique. De tels algorithmes sont utilisés dans des applications où l'accès à des services ou à des données est sévèrement contrôlé.

Parmi les algorithmes de cryptographie à clé secrète on peut citer l'algorithme DES (pour *Data Encryption Standard* dans la littérature anglo-saxonne). D'autres algorithmes à clé secrète existent, comme l'algorithme RC5 ou encore l'algorithme COMP128. Cette liste n'est bien sûr pas exhaustive.

Parmi les algorithmes de cryptographie à clé publique on peut citer le RSA (Rivest Shamir et Adelman), El Gamal, Schnorr, Fiat Shamir, ou DSA ou DSS.

De manière générale et succincte, ces algorithmes ont pour but d'effectuer des calculs cryptographiques à partir d'un système hôte (serveur, distributeur bancaire, ...) et de la clé secrète ou de clés publiques et secrètes contenues dans la carte, et de fournir en retour au système hôte un message chiffré ou de permettre une authentification du microcircuit ( de la carte), ou de signer des messages.

Toute la sécurité de ces algorithmes de cryptographie repose sur le fait de savoir conserver secrètes les données qui doivent le rester. Dans le cas des algorithmes cryptographiques la ou les clés secrètes ne peuvent être déduites de la seule connaissance des informations échangées entre la carte et l'extérieur.

Or il est apparu que des attaques externes, basées sur les consommations de courant ou une analyse différentielle de consommation en courant lorsque le processeur de cryptographie ou le processeur d'une carte à puce effectue des opérations de calcul entraînant la manipulation de données secrètes, de telles manipulations permettent à des tiers mal intentionnés de trouver la clé secrète contenue dans cette carte en procédant à des attaques appelées attaques DPA, acronyme anglo-saxon pour *Differential Power Analysis.*

Le principe de ces attaques DPA repose sur le fait que la consommation en courant du processeur exécutant des instructions varie selon la donnée manipulée.

Notamment, quand une instruction exécutée par le processeur nécessite une manipulation d'une donnée bit par bit, on a deux profils de courant différents selon que ce bit vaut "1" ou "0". Typiquement, si le processeur manipule un "0", on a à cet instant d'exécution une première amplitude du courant consommé et si le processeur manipule un "1", on a une deuxième amplitude du courant consommé, différente de la première.

Ainsi l'attaque DPA exploite la différence du profil de consommation en courant dans la carte pendant l'exécution d'une instruction suivant la valeur du bit manipulé. D'une manière simplifiée, la conduite d'une attaque DPA consiste à identifier une ou des périodes particulières du déroulement de l'algorithme comprenant l'exécution d'au moins une instruction manipulant des données bit par bit; à relever un très grand nombre N de courbes de consommation en courant pendant cette ou ces périodes, une courbe par message différent sur lequel on applique l'algorithme; à prédire, pour chaque courbe, la valeur prise par un bit de la donnée pour une hypothèse sur une sous-clé, c'est à dire sur une partie au moins de la clé secrète, qui permet de faire la prédiction ; et à effectuer un tri des courbes selon la fonction de sélection booléenne correspondante : on obtient un premier paquet de courbes pour lesquelles la prédiction vaut "1" et un deuxième paquet de courbes pour lesquelles la prédiction vaut "0". En effectuant une analyse différentielle de la consommation moyenne en courant entre les deux paquets de courbes obtenus, on obtient un signal d'information DPA(t).

Si l'hypothèse de sous-clé n'est pas juste, chaque paquet comprend en réalité autant de courbes correspondant à la manipulation d'un "1" que de courbes manipulant un "0". Les deux paquets sont donc équivalents en terme de consommation en courant et le signal d'information est sensiblement nul. Si l'hypothèse de sous-clé est juste, un paquet comprend réellement les courbes correspondant à la manipulation d'un "0" et l'autre paquet comprend réellement les courbes correspondant à la manipulation d'un "0" : le signal d'information DPA(t) obtenu n'est pas nul : il comprend des pics de consommation correspondant à la manipulation par le processeur du bit sur lequel on a basé le tri. Ces pics ont une amplitude correspondant à la différence de consommation par le processeur selon qu'il manipule un "1" ou un "0". Ainsi, de proche en proche, il est possible de découvrir tout ou partie de la clé secrète contenue dans un microcircuit.

Il existe de nombreux algorithmes pour l'exécution desquels le processeur ou une unité de calcul associée (cryptoprocesseur) doit effectuer à certains moments des manipulations de données bit par bit.

C'est notamment le cas comme on l'a dit pour les algorithmes cryptographiques. En analysant la consommation de courant lors de l'exécution de ces manipulations bit par bit, il est possible de retrouver la valeur de certains bits au moins de la donnée manipulée. La connaissance de cette donnée peut fournir des informations sur des résultats intermédiaires obtenus lors de l'exécution de l'algorithme de cryptographie, qui à leur tour peuvent permettre de retrouver une partie au moins des bits de la clé secrète utilisée.

Le déposant s'est aperçu qu'une telle attaque peut être menée à partir de l'observation des variations de consommation de courant liées aux transitions des valeurs binaires sur le bus du microcircuit. En effet le déposant a observé que le changement d'état entre deux bits de même poids d'une donnée à l'autre provoquait une consommation plus élevée que dans le cas où il n'y pas de changement d'état. Ainsi, les transitions laissent une signature pour les données qui circulent sur le bus. Cette situation est très préjudiciable bien entendu dans le cas où ces données sont des données secrètes.

La présente invention a pour but de résoudre ce problème. Elle est définie par les revendications 1, 7 et 13.

Elle a pour objet de protéger les données sur lesquelles on effectue des manipulations bit par bit, en leur appliquant une contre-mesure, c'est à dire un brouillage, en sorte que l'analyse de la consommation de courant lors des transitions d'une donnée à la suivante transitant sur le bus ne révèle aucune information sur ces données : le signal d'information DPA(t) sera toujours le même dans les attaques DPA.

Telle que revendiquée, l'invention concerne un procédé de contre-mesure dans un microcircuit comprenant un processeur apte à effectuer des opérations dont une consiste à manipuler au moins une donnée secrète, au moins une mémoire non volatile contenant la ou les données secrètes, au moins une mémoire de travail, lesdites mémoires étant reliées par un bus audit processeur, principalement caractérisé en ce que le procédé comprend l'injection sur le bus de plusieurs données aléatoires entre des données issues d'opérations effectuées par le processeur.

Selon une autre caractéristique, le procédé consiste à activer l'injection sur le bus de plusieurs données aléatoires pendant une période durant laquelle la ou les données secrètes sont manipulées, et à inhiber l'injection desdites données aléatoires en dehors de ces périodes.

Selon une autre caractéristique, l'opération consistant à manipuler une donnée secrète est mise en oeuvre par un algorithme cryptographique.

L'algorithme de cryptographie peut être un algorithme à clé secrète.

Cet algorithme de cryptographie peut alternativement être un algorithme à clé publique.

La donnée secrète peut être un code personnel d'identification.

L'invention concerne également un microcircuit pour dispositif portable de type carte à puce, comprenant un processeur apte à effectuer des opérations dont une consiste à manipuler au moins une donnée secrète, au moins une mémoire non volatile comprenant la ou les données secrètes, au moins une mémoire de travail, reliées par un bus audit processeur, principalement **caractérisé en ce qu**'il comporte un générateur de données aléatoires, un multiplexeur comprenant une entrée reliée à la sortie du générateur de données aléatoires laquelle est reliée au bus d'entrées-sorties du processeur pour injecter sur ce bus des données aléatoires sur commande du processeur.

Le générateur de données aléatoires est activé par un signal d'horloge de fréquence supérieure à celle du processeur.

Le signal d'horloge peut être un multiple du signal d'horloge du processeur lequel peut être généré en interne (interne au processeur) ou provenir de l'extérieur (à partir des plages de contact de la carte à puce dans laquelle est implanté le microcircuit).

Le microcircuit comporte un circuit logique apte à fournir ledit signal d'horloge multiple du signal d'horloge du processeur.

Dans le cas où le microcircuit possède plusieurs bus, les moyens pour injecter des données aléatoires sont réalisés par une macro-instruction.

L'invention concerne également une carte à puce, comprenant un microcircuit tel qu'il vient d'être présenté.

D'autres particularités et avantages de l'invention apparaîtront clairement à la lecture de la description faite ci-après et qui est donnée à titre d'exemple non limitatif et en regard des dessins annexés sur lesquels :
- la figure 1, représente une architecture simplifiée d'un microcircuit apte à mettre en oeuvre le procédé selon l'invention,
- les figures 2A à 2G, représentent les signaux de fonctionnement du microcircuit,
- la figure 3, représente un schéma détaillé d'implémentation d'un mode de réalisation du microcircuit selon l'invention.

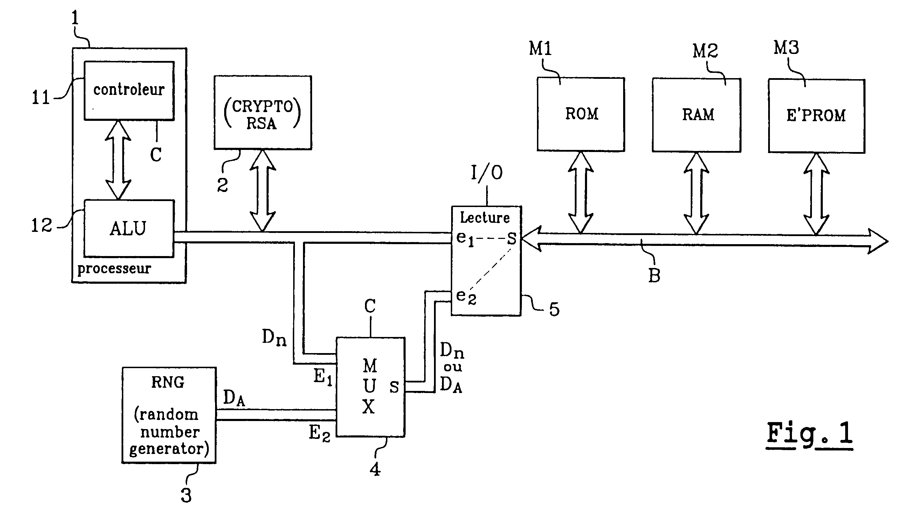

On a représenté sur la figure 1 un microcircuit simplifié, c'est à dire uniquement les éléments nécessaires à la compréhension de l'invention.

Dans le cas d'une implantation dans une carte à puce, le microcircuit a l'architecture du micromodule de la carte c'est à dire qu'il comporte : une unité principale de traitement 1 (dénommée processeur) comprenant un contrôleur 11, un ou plusieurs bus 12 pour relier l'unité 1 à des mémoires associées composées d'au moins une mémoire de programmes M1 (non volatile de type ROM), au moins une mémoire de travail M2 (de type RAM), et au moins une mémoire de programme programmable électriquement M3 (de type EEPROM). Le microcircuit peut comporter en outre une unité de calcul 2 (cryptoprocesseur) pour mettre en oeuvre des calculs d'exponentiations modulaires comme c'est le cas par exemple dans le cas de l'exécution de l'algorithme cryptographique à clé publique RSA (Rivest Shamir Adelman).

Pour la mise en oeuvre du procédé de contre mesure selon l'invention, le microcircuit schématisé sur cette figure 1 comporte en outre un générateur de valeurs aléatoires 3 activé par une horloge H et un multiplexeur 4 activé par un signal de commande C de sa sortie S. Le microcircuit comporte en outre un système 5 de gestion des informations circulant sur le bus B (de type multiplexeur à deux entrées e1, e2- une sortie s) piloté par le contrôleur 11. Dans le cas d'une lecture dans une mémoire, le système 5 permet de relier directement l'unité arithmétique et logique 12 aux mémoires M1, M2, M3 ; dans le cas d'une écriture dans une mémoire la sortie du multiplexeur 4 va sur le bus B.

Le contrôleur 11 du microcircuit peut être associé à un opérateur cryptographique 2 comme déjà précisé et manipuler une ou plusieurs données secrètes.

Pour simplifier, on va prendre le cas d'une seule donnée secrète manipulée (ce qui est le cas par exemple dans la mise en oeuvre d'un algorithme à clé secrète ou d'un code PIN (Personal Identifier Code). Cette donnée est stockée de manière sécurisée dans la mémoire de programme non volatile M1 associée au processeur 11.

Lors de l'exécution d'une opération de cryptographie ou de vérification du code d'identification (PIN), le processeur va procéder selon l'invention, à une ou des interruptions de manière à injecter des données aléatoires sur le bus 12 (bus sur lequel sont alors susceptibles de transiter les données secrètes).

En effet au cours de l'exécution, lancée par le processeur, d'une instruction qui comporte par exemple, l'écriture d'une donnée secrète, cette dernière va alors transiter sur le bus B pour aller en mémoire de travail M2 en vue du traitement à effectuer avec cette donnée. Une suite de données va par conséquent transiter sur le bus B pour chaque opération exécutée, ces données sont des commandes et des données « utiles » au traitement effectué. Selon le procédé de l'invention, le processeur est apte à émettre une interruption qui peut être déclenchée par le programme lui-même de manipulation des données secrètes (en l'occurrence le programme de cryptographie), ayant pour but d'interrompre l'exécution de l'instruction en cours, de sauvegarder le contexte dans les registres et de déclencher l'insertion de données aléatoires (générées par le générateur 3) sur le bus B. Le signal d'interruption de l'exécution de l'instruction en cours peut être utilisé comme signal de commande C pour le multiplexeur 4.

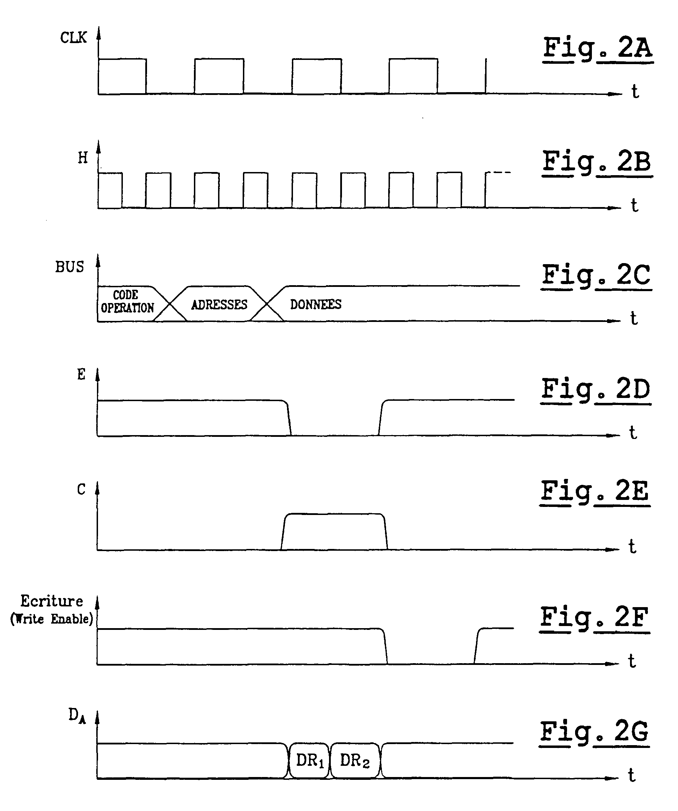

On a illustré sur les figures 2A à 2G les signaux de fonctionnement du microcircuit.

Le signal d'horloge CLK du processeur est représenté à la figure 2A.

La figure 2B illustre un exemple de signal d'horloge H pour piloter le générateur aléatoire 3.

On choisit une fréquence d'horloge H supérieure à l'horloge CLK du processeur de manière à ce que plusieurs données aléatoires DA₁, DAₙ puissent être injectées entre le moment de l'interruption de l'exécution d'une instruction et sa reprise. Ces données aléatoires sont ainsi injectées entre des données transmises par le bus B entre ces deux instants. Les données aléatoires ont pour but de recharger ou de décharger aléatoirement le bus.

L'insertion de plusieurs données permet d'obtenir le résultat escompté.

On choisit une horloge H plus rapide que l'horloge CLK du processeur par exemple multiple de cette dernière de manière à envoyer au moins deux données aléatoires.

Les données, qu'il s'agisse de commandes ou de données à traiter, sont illustrées sur le graphe du bus figure 2C.

La figure 2D illustre le déroulement de l'exécution d'une instruction et son interruption à la réception du signal d'interruption. Cette interruption permet de générer le signal de commande C de la sortie du multiplexeur, illustré sur la figure 2E.

Le signal de commande d'écriture émis par le processeur est illustré sur la figure 2F.

La figure 2G illustre les données DA générées par le générateur aléatoire 3.

La figure 2E illustre un exemple de signal de commande C d'activation du multiplexeur 3. Selon l'exemple illustré, lorsque le signal C est à 0, le multiplexeur délivre à sa sortie S le signal reçu sur son entrée E1, et lorsque le signal C est à 1, il délivre les données reçues sur son entrée E2, ce signal C est selon cet exemple à 1 en présence d'une interruption d'exécution d'instruction émise par le processeur.

L'entrée E1 du multiplexeur 4 correspond aux données de sortie du processeur (ALU).

Les données reçues sur l'entrée E2 sont les données émises par le générateur 3.

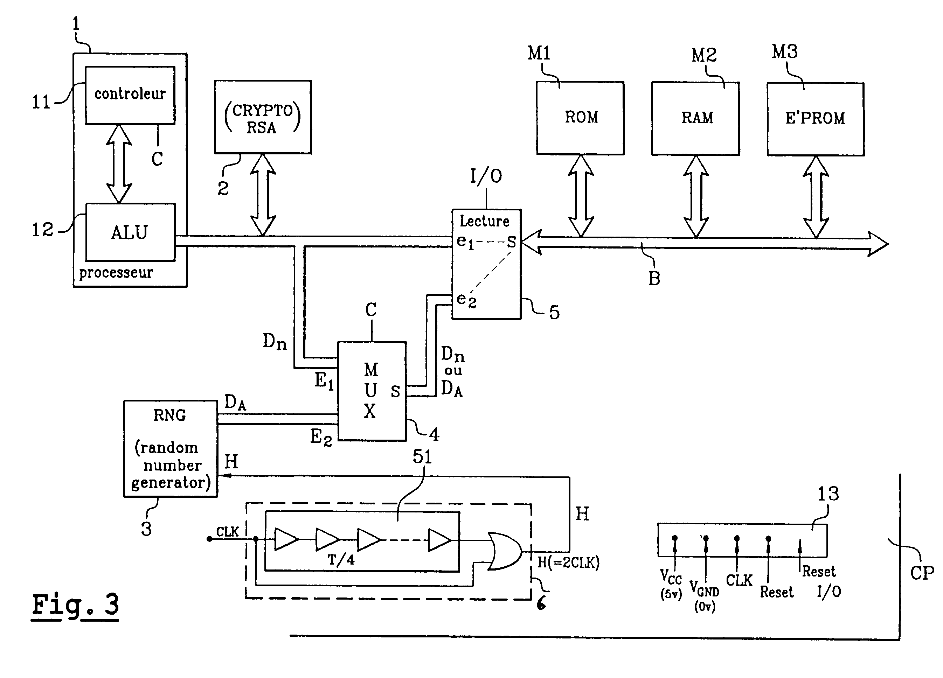

On a représenté sur la figure 3, un exemple détaillé d'un mode de réalisation de l'invention.

Dans le cas où le microcircuit est implanté dans une carte à puce il comporte en outre une interface 13 de communication avec l'extérieur représentée de façon schématique sur cette figure. Cette interface comprend les plages de contact de la carte à puce destinées à recevoir le signal d'horloge CLK, les signaux de tension Vcc et Vss, un signal de remise à zéro Reset, et les signaux d'entrée sortie I/O. Elle comporte en outre une unité asynchrone de transmission.

Dans la réalisation qui va être décrite l'horloge H est obtenue à partir d'un circuit logique 6 multiplieur du signal d'horloge CLK. Ce circuit 6 est composé par exemple de portes 51 en série introduisant un retard. Le retard peut être de T/4, (T étant la période de l'horloge CLK) et permet dans ce cas d'injecter au moins deux données aléatoires entre deux données transitant sur le bus.

La commande C est générée par le processeur programmé à cet effet.

Un circuit logique pourrait être prévu à cet effet.

Dans le cas ou le microcircuit possède plusieurs bus, les fonctions qui viennent d'être décrites peuvent ne pas être réalisées par des circuits, mais par une macro-instruction prévue à cet effet.

## Revendications

1. Procédé de contre-mesure dans un microcircuit comprenant un processeur apte à effectuer des opérations dont une consiste à manipuler au moins une donnée secrète, au moins une mémoire non volatile contenant la ou les données secrètes, au moins une mémoire de travail, lesdites mémoires étant reliées par un bus audit processeur, **caractérisé en ce que** le procédé comprend l'injection sur le bus de plusieurs données aléatoires entre des données issues d'opérations effectuées par le processeur, ces données aléatoires ayant pour but de recharger ou de décharger aléatoirement le bus.

2. Procédé de contre-mesure dans un microcircuit selon la revendication 1, **caractérisé en ce que** qu'il consiste à activer l'injection sur le bus de plusieurs données aléatoires pendant une période durant laquelle la ou les données secrètes sont manipulées, et à inhiber l'injection desdites données aléatoires en dehors de ces périodes.

3. Procédé de contre-mesure selon la revendication 1 ou 2, **caractérisé en ce que** l'opération consistant à manipuler une donnée secrète est mise en oeuvre par un algorithme cryptographique.

4. Procédé de contre-mesure selon la revendication 3, **caractérisé en ce que** l'algorithme de cryptographie est un algorithme à clé secrète.

5. Procédé de contre-mesure selon la revendication 3, **caractérisé en ce que** l'algorithme de cryptographie est un algorithme à clé publique.

6. Procédé de contre-mesure selon la revendication 1 ou 2, **caractérisé en ce que** la donnée secrète est un code personnel d'identification.

7. Microcircuit pour dispositif portable de type carte à puce, comprenant un processeur apte à effectuer des opérations dont une consiste à manipuler au moins une donnée secrète, au moins une mémoire non volatile (M1, M3) comprenant la ou les données secrètes, au moins une mémoire de travail (M2), reliées par un bus (B) audit processeur, **caractérisé en ce qu'**il comporte des moyens (3, 4, 6) pour injecter sur ce bus des données aléatoires sur commande du processeur.

8. Microcircuit pour dispositif portable selon la revendication 7, **caractérisé en ce que** les moyens pour injecter sur le bus des données aléatoires comportent un générateur de données aléatoires (3), un multiplexeur (4) comprenant une entrée (E2) reliée à la sortie du générateur de données aléatoires laquelle est reliée au bus (B)

9. Microcircuit pour dispositif portable selon la revendication 8, **caractérisé en ce que** le générateur de données aléatoires est activé par un signal d'horloge (H) de fréquence supérieure à celle du processeur.

10. Microcircuit pour dispositif portable selon la revendication 8 et 9, **caractérisé en ce que** le signal d'horloge (H) est un multiple du signal d'horloge (CLK) du processeur.

11. Microcircuit pour dispositif portable selon l'une quelconque des revendications 8 à 10, **caractérisé en ce qu'**il comporte un circuit logique (6) apte à fournir ledit signal d'horloge (H) multiple du signal d'horloge du processeur.

12. Microcircuit pour dispositif portable selon la revendication 7, **caractérisé en ce que**, dans le cas où le microcircuit possède plusieurs bus, les moyens pour injecter des données aléatoires sont réalisés par une macro-instruction.

13. Carte à puce, **caractérisé en ce qu'**elle comporte un microcircuit selon l'une quelconque des revendications 7 à 12.

## Claims

1. A countermeasure method in a microcircuit comprising a processor able to perform operations, one of which consists of manipulating at least one secret data item, at least one non-volatile memory containing the secret data, at least one working memory, the said memories being connected to the said processor by a bus, **characterised in that** the method comprises the injection onto the bus of several random data between data issuing from operations performed by the processor, the purpose of these random data being to randomly recharge or discharge the bus.

2. A countermeasure method in a microcircuit according to claim 1, **characterised in that** it consists of activating the injection onto the bus of several random data during a period during which the secret data are manipulated, and inhibiting the injection of the said random data outside these periods.

3. A countermeasure method according to claims 1 or 2, **characterised in that** the operation consisting of manipulating a secret data item is performed by a cryptographic algorithm.

4. A countermeasure method according to claim 3, **characterised in that** the cryptography algorithm is a secret key algorithm.

5. A countermeasure method according to claim 3, **characterised in that** the cryptography algorithm is a public key algorithm.

6. A countermeasure method according to claim 1 or 2, **characterised in that** the secret data item is a personal identification code.

7. A microcircuit for a portable device of the chip card type, comprising a processor able to perform operations, one of which consists of manipulating at least one secret data item, at least one non-volatile memory (M1, M3) comprising the secret data, at least one working memory (M2), connected to the said processor by a bus (B), **characterised in that** it comprises means (3, 4, 6) for injecting random data onto this bus on command from the processor.

8. A microcircuit for a portable device according to claim 7, **characterised in that** the means for injecting random data onto the bus comprise a random data generator (3), a multiplexor (4) comprising an input (E2) connecting to the output of the random data generator, which is connected to the bus (B).

9. A microcircuit for a portable device according to claim 8, **characterised in that** the random data generator is activated by a clock signal (H) with a frequency higher than that of the processor.

10. A microcircuit for a portable device according the claims 8 and 9, **characterised in that** the clock signal (H) is a multiple of the clock signal (CLK) of the processor.

11. A microcircuit for a portable device according to any one of claims 8 to 10, **characterised in that** it comprises a logic circuit (6) able to supply the said clock signal (H) as a multiple of the clock signal of the processor.

12. A microcircuit for a portable device according to claim 7, **characterised in that**, where the microcircuit has several buses, the means for injecting random data are implemented by a macro-instruction.

13. A chip card, **characterised in that** it comprises a microcircuit according to any one of claims 7 to 12.

## Patentansprüche

1. Verfahren zur Gegenmaßnahme in einer Mikroschaltung, die einen Prozessor umfaßt, der geeignet ist, Vorgänge auszuführen, von denen einer darin besteht, mindestens eine Geheimgröße zu bearbeiten, mindestens einen nichtflüchtigen Speicher, der die Geheimgröße oder die Geheimdaten enthält, mindestens einen Arbeitsspeicher, wobei die besagten Speicher durch einen Bus an den besagten Prozessor angeschlossen sind, **dadurch gekennzeichnet, daß** das Verfahren die Eingabe mehrerer Zufallsdaten auf den Bus zwischen Daten umfaßt, die aus vom Prozessor durchgeführten Operationen hervorgegangen sind, wobei diese Zufallsdaten zum Ziel haben, den Bus zufallsbedingt wieder zu beladen oder zu entladen.

2. Verfahren zur Gegenmaßnahme in einer Mikroschaltung nach Anspruch 1, **dadurch gekennzeichnet, daß** es darin besteht, die Eingabe mehrerer Zufallsdaten auf den Bus während eines Zeitraums zu aktivieren, in dessen Verlauf die Geheimgröße oder die Geheimdaten bearbeitet werden, und außerhalb dieser Zeiträume die Eingabe der besagten Zufallsdaten zu hemmen.

3. Verfahren zur Gegenmaßnahme nach Anspruch 1 oder 2, **dadurch gekennzeichnet, daß** der Vorgang, der darin besteht, eine Geheimgröße zu bearbeiten, von einem kryptographischen Algorithmus eingesetzt wird.

4. Verfahren zur Gegenmaßnahme nach Anspruch 3, **dadurch gekennzeichnet, daß** der Algorithmus der Chiffreschrift ein Algorithmus mit Geheimschlüssel ist.

5. Verfahren zur Gegenmaßnahme nach Anspruch 3, **dadurch gekennzeichnet, daß** der Algorithmus der Chiffreschrift ein Algorithmus mit öffentlichem Schlüssel ist.

6. Verfahren zur Gegenmaßnahme nach Anspruch 1 oder 2, **dadurch gekennzeichnet, daß** die Geheimgröße ein persönlicher Kenncode ist.

7. Mikroschaltung für eine tragbare Vorrichtung von der Art Chipkarte, die einen Prozessor umfaßt, der geeignet ist, Vorgänge auszuführen, von denen einer darin besteht, mindestens eine Geheimgröße zu bearbeiten, mindestens einen nichtflüchtigen Speicher (M1, M3), der die Geheimgröße oder die Geheimdaten enthält, mindestens einen Arbeitsspeicher (M2), die durch einen Bus (B) an den besagten Prozessor angeschlossen sind, **dadurch gekennzeichnet, daß** sie Mittel (3, 4, 6) zur Eingabe von Zufallsdaten auf diesen Bus auf Befehl des Prozessors umfaßt.

8. Mikroschaltung für eine tragbare Vorrichtung nach Anspruch 7, **dadurch gekennzeichnet, daß** die Mittel zur Eingabe von Zufallsdaten auf den Bus einen Generator von Zufallsdaten (3) umfassen, einen Multiplexer (4), der einen Eingang (E2) umfaßt, der an den Ausgang des Generators von Zufallsdaten angeschlossen ist, der an den Bus (B) angeschlossen ist.

9. Mikroschaltung für eine tragbare Vorrichtung nach Anspruch 8, **dadurch gekennzeichnet, daß** der Generator von Zufallsdaten durch ein Taktsignal (H) aktiviert wird, dessen Frequenz höher als diejenige des Prozessors ist.

10. Mikroschaltung für eine tragbare Vorrichtung nach Anspruch 8 und 9, **dadurch gekennzeichnet, daß** das Taktsignal (H) ein Vielfaches des Taktsignals (CLK) des Prozessors ist.

11. Mikroschaltung für eine tragbare Vorrichtung nach einem beliebigen der vorstehenden Ansprüche 8 bis 10, **dadurch gekennzeichnet, daß** sie einen logischen Schaltkreis (6) umfaßt, der geeignet ist, das besagte Taktsignal (H) als Vielfaches des Taktsignals des Prozessors zu liefern.

12. Mikroschaltung für eine tragbare Vorrichtung nach Anspruch 7, **dadurch gekennzeichnet, daß** in dem Fall, daß die Mikroschaltung mehrere Busse besitzt, die Mittel für die Eingabe der Zufallsdaten durch einen Makrobefehl realisiert werden.

13. Chipkarte, **dadurch gekennzeichnet, daß** sie eine Mikroschaltung nach einem beliebigen der vorstehenden Ansprüche 7 bis 12 umfaßt.
